(19) Europäisches Patentamt / European Patent Office / Office européen des brevets

(11) EP 2 823 342 B1

(12) **FASCICULE DE BREVET EUROPEEN**

(45) Date de publication et mention de la délivrance du brevet:
**28.11.2018 Bulletin 2018/48**

(21) Numéro de dépôt: **13707183.3**

(22) Date de dépôt: **05.03.2013**

(51) Int Cl.:
***G02B 6/14*** $^{(2006.01)}$ ***G02B 6/036*** $^{(2006.01)}$
***B23K 26/06*** $^{(2014.01)}$ ***H01S 3/00*** $^{(2006.01)}$
***G02B 27/09*** $^{(2006.01)}$

(86) Numéro de dépôt international:
**PCT/EP2013/054341**

(87) Numéro de publication internationale:
**WO 2013/131877 (12.09.2013 Gazette 2013/37)**

(54) **DISPOSITIF DE CONVERSION DU PROFIL SPATIAL TRANSVERSE D'INTENSITE D'UN FAISCEAU LUMINEUX, UTILISANT DE PREFERENCE UNE FIBRE OPTIQUE MICROSTRUCTUREE**

VORRICHTUNG ZUR UMWANDLUNG DES RÄUMLICH-TRANSVERSALEN INTENSITÄTSPROFILS EINES LICHTSTRAHLS, VORZUGSWEISE MIT EINER MIKROSTRUKTURIERTEN GLASFASER

DEVICE FOR CONVERTING THE TRANSVERSE SPATIAL PROFILE OF INTENSITY OF A LIGHT BEAM, PREFERABLY USING A MICROSTRUCTURED OPTICAL FIBRE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **08.03.2012 FR 1252098**

(43) Date de publication de la demande:
**14.01.2015 Bulletin 2015/03**

(73) Titulaires:
- **Commissariat à l'Énergie Atomique et aux Énergies Alternatives 75015 Paris (FR)**
- **Université Lille 1 - Sciences Et Technologies 59655 Villeneuve D'ascq Cedex (FR)**
- **Centre National de la Recherche Scientifique 75016 Paris (FR)**

(72) Inventeurs:
- **HUGONNOT, Emmanuel F-33400 Talence (FR)**
- **MUSSOT, Arnaud F-59260 Hellemmes (FR)**
- **QUIQUEMPOIS, Yves F-59520 Marquette Lez Lille (FR)**
- **BOUWMANS, Géraud F-59560 Villeneuve D'Ascq Cedex (FR)**
- **BIGOT, Laurent F-59260 Hellemmes (FR)**
- **VALENTIN, Constance F-59170 Croix (FR)**

(74) Mandataire: **Brevalex 95, rue d'Amsterdam 75378 Paris Cedex 8 (FR)**

(56) Documents cités:
**EP-A2- 0 724 171**

- **GATHAK A K ET AL: "Design of Waveguide Refractive Index Profiel to Obtain Flat Modal Field", SPIE PROCEEDINGS, THE INTERNATIONAL SOCIETY FOR OPTICAL ENGINEERING - SPIE, BELLINGHAM, WASHINGTON, USA, vol. 3666, 1 janvier 1998 (1998-01-01), pages 40-44, XP002328355, ISSN: 0277-786X, DOI: 10.1117/12.347957**
- **WANG C C ET AL: "Photonic crystal fiber with a flattened fundamental mode for the fiber lasers", OPTICS COMMUNICATIONS, NORTH-HOLLAND PUBLISHING CO. AMSTERDAM, NL, vol. 282, no. 11, 1 juin 2009 (2009-06-01) , pages 2232-2235, XP026038745, ISSN: 0030-4018, DOI: 10.1016/J.OPTCOM.2009.02.049 [extrait le 2009-03-10]**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

- **ELKIN N N ET AL: "Modeling of Large Flattened Mode Area Fiber Lasers", LASER PHYSICS, MOSCOW, RU, vol. 20, no. 2, 1 janvier 2010 (2010-01-01), pages 304-310, XP007921188, ISSN: 1054-660X, DOI: 10.1134/S1054660X10030060 Î [extrait le 2009-12-23]**

## Description

### DOMAINE TECHNIQUE

La présente invention concerne un dispositif de conversion du profil spatial transverse d'intensité d'un faisceau lumineux.

Elle trouve des applications dans le domaine des systèmes lasers fibrés et permet notamment de transformer, sans pertes, un faisceau gaussien en un faisceau aplati (en anglais, *top hat*) ou en anneau (en anglais, *ring-shaped*) pour des applications au micro-usinage laser, telles que le marquage et la soudure, ou pour des applications médicales nécessitant une interaction entre la lumière et les tissus biologiques.

### ÉTAT DE LA TECHNIQUE ANTÉRIEURE

La transformation du profil d'intensité d'un faisceau laser d'une forme gaussienne en toute autre forme est généralement effectuée en espace libre,

- soit par modification de l'amplitude par des systèmes de masques ou de diaphragmes, selon la technique de diaphragmation de faisceau (en anglais, *beam aperturing*),
- soit par modulation de la phase spatiale à l'aide de composants réfractifs ou diffractifs, selon la technique de transformation de champ (en anglais, *field mapping*).

Dans le cas de faisceaux incohérents, on utilise des composants homogénéiseurs constituant des intégrateurs de faisceau (en anglais, *beam integrators*).

Afin de bénéficier des avantages des fibres optiques en termes de compacité et de facilité d'alignement, on a développé des techniques d'homogénéisation de faisceaux à l'aide de fibres optiques fortement multimodes.

On connaît également des fibres optiques dont le mode fondamental est aplati (en anglais, *flattened*). A ce sujet, on se reportera aux documents [1] à [4] qui, comme les autres documents cités par la suite, sont mentionnés à la fin de la présente description. Dans ce cas, la mise en forme spatiale du faisceau (en anglais, *spatial beam shaping*) est effectuée par excitation du mode fondamental aplati après injection du faisceau incident dans la fibre (voir le document [5]).

Les transformations effectuées en espace libre, qui sont fondées sur la modification de l'amplitude, entraînent de fortes pertes. Et celles qui sont fondées sur la modulation de la phase spatiale entraînent peu de pertes mais sont extrêmement sensibles à l'alignement et sont onéreuses.

L'utilisation de dispositifs à composants homogénéiseurs, que ce soit en espace libre ou en optique intégrée ou fibrée, implique de faibles cohérences spatiales des faisceaux en sortie de ces dispositifs.

L'utilisation d'une fibre dont le mode fondamental est aplati permet d'avoir une mise en forme spatiale qui est robuste, compacte et sans alignement ; mais le fait que le mode fondamental de la fibre n'ait pas la même forme que le faisceau incident entraîne des pertes à l'injection. De plus, comme il est extrêmement difficile de réaliser une fibre infiniment monomode (voir le document [6]), la fibre utilisée est en fait très légèrement multimode, et cela implique une dépendance de la forme de sortie vis-à-vis des conditions d'injection.

Il n'existe donc actuellement aucune solution compacte, robuste et peu onéreuse pour transformer le profil d'intensité d'un faisceau laser d'une forme gaussienne vers une forme aplatie ou vers une forme en anneau (ou réciproquement).

### EXPOSÉ DE L'INVENTION

La présente invention telle que définie par la revendication 1a pour but de remédier aux inconvénients précédents.

De façon précise, elle a pour objet un dispositif de conversion du profil spatial transverse d'intensité d'un faisceau lumineux, ayant une longueur d'onde déterminée, pour le faire passer d'un premier profil, ayant une première forme, à un deuxième profil, ayant une deuxième forme qui est différente de la première forme, caractérisé en ce qu'il comprend une fibre optique ayant des première et deuxième extrémités et comportant un coeur (en anglais, *core*), un anneau qui entoure le coeur et dont l'indice optique est supérieur à celui du coeur, et une gaine optique (en anglais, *optical cladding*) qui entoure l'anneau et dont l'indice optique est inférieur à celui du coeur, et en ce que les dimensions transverses de la fibre optique varient longitudinalement et les première et deuxième extrémités ont des paramètres opto-géométriques adaptés de telle façon qu'à la longueur d'onde déterminée, la fibre optique ait un mode fondamental ayant le premier profil au niveau de la première extrémité et le deuxième profil au niveau de la deuxième extrémité, de sorte qu'en injectant le faisceau lumineux ayant le premier profil par la première extrémité de la fibre optique, il en ressort par la deuxième extrémité avec le deuxième profil, dont la forme est différente de celle du premier profil.

Selon l'objet de l'invention, la fibre optique est une fibre microstructurée (en anglais, *photonic crystal fiber*).

Selon l'invention, le premier profil est l'un des trois profils de l'ensemble constitué par un profil quasi-gaussien, un profil plat et un profil en anneau, et le deuxième profil est l'un des deux autres profils de l'ensemble.

Dans l'invention, les dimensions transverses de la fibre optique peuvent rester sensiblement constantes sur toute la longueur de la fibre optique, sauf en au moins l'une des première et deuxième extrémités.

De plus, dans l'invention, la fibre optique peut être choisie parmi les fibres optiques amplificatrices et les fibres optiques non-amplificatrices.

Selon un mode de réalisation particulier, le dispositif, objet de l'invention, comprend en outre une fibre optique auxiliaire qui est optiquement couplée à l'une des première et deuxième extrémités.

Selon un autre mode de réalisation particulier, le dispositif comprend en outre deux fibres optiques auxiliaires qui sont respectivement couplées optiquement aux première et deuxième extrémités.

Chaque fibre optique auxiliaire peut être choisie parmi les fibres amplificatrices et les fibres non-amplificatrices.

## BRÈVE DESCRIPTION DES DESSINS

La présente invention sera mieux comprise à la lecture de la description d'exemples de réalisation donnés ci-après, à titre purement indicatif et nullement limitatif, en faisant référence aux dessins annexés sur lesquels :

- la figure 1A est une vue en coupe transversale schématique d'un exemple de fibre optique microstructurée, et la figure 1B montre le profil radial de l'indice optique pour cet exemple de fibre,
- la figure 1C montre les variations de l'épaisseur $\Delta R$ de l'anneau, permettant l'obtention d'un profil aplati, pour la fibre optique de la figure 1A, en fonction du contraste d'indice $\Delta n$, pour un défaut de 7 et diverses valeurs de l'espacement A entre chaque trou de la fibre,
- la figure 2A montre l'évolution schématique de l'indice effectif dans une fibre optique microstructurée, en fonction du rapport $\Lambda/\lambda$, où $\lambda$ représente la longueur d'onde de la lumière destinée à être guidée par la fibre,
- les figures 2B à 2D illustrent respectivement un mode gaussien, un mode plat et un mode en anneau que l'on peut obtenir pour la fibre microstructurée en choisissant convenablement le rapport $\Lambda/\lambda$,
- la figure 3A est une vue de profil schématique d'un mode de réalisation particulier du dispositif, objet de l'invention, utilisant une fibre optique microstructurée effilée (en anglais, *tapered*),
- les figures 3B et 3C sont des vues schématiques des deux extrémités de la fibre représentée sur la figure 3A,
- la figure 4 est une vue de profil schématique d'un autre mode de réalisation particulier du dispositif, objet de l'invention, et
- la figure 5 est une vue de profil schématique d'un autre exemple de l'invention.

## EXPOSÉ DÉTAILLÉ DE MODES DE RÉALISATION PARTICULIERS

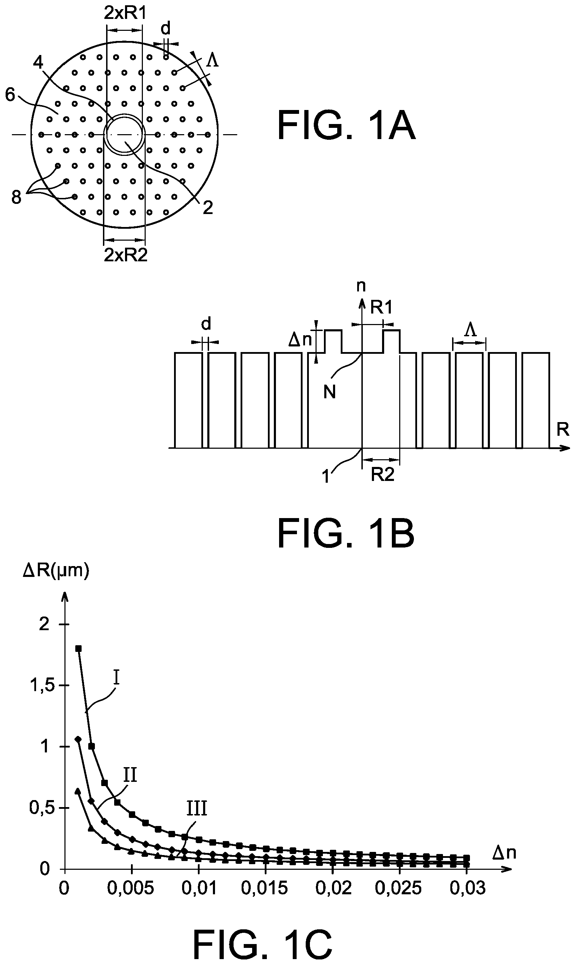

La figure 1A est une vue en coupe transversale schématique d'un exemple de fibre optique microstructurée. La figure 1B montre le profil d'indice de la fibre représentée sur la figure 1A, suivant une coupe horizontale, c'est-à-dire les variations de l'indice optique $\underline{n}$ en fonction du rayon R (profil radial).

L'intérêt de la microstructuration est notamment d'assurer un comportement quasi-monomode, même pour un coeur de grande taille par rapport à la longueur d'onde $\lambda$ de la lumière qui se propage dans la fibre.

La fibre représentée sur la figure 1A comprend :

- une partie centrale constituée d'un coeur 2 dont l'indice optique est noté N, et d'un anneau 4 dont l'indice optique est égal à $N+\Delta n$ où $\Delta n$ est strictement positif, et
- une gaine optique 6 entourant l'anneau 4, comportant des inclusions d'air et ayant un indice optique moyen $n_{FSM}$ inférieur à l'indice optique N du coeur 2 (mais l'air n'est qu'un cas particulier : plus généralement, on peut utiliser des inclusions dont l'indice de réfraction est inférieur à celui du coeur).

Plus précisément, dans l'exemple représenté sur la figure 1A, la gaine optique 6 comporte des trous longitudinaux 8 (inclusions d'air) qui sont parallèles à l'axe de la fibre. La gaine 6 est constituée du même matériau que le coeur mais, du fait de l'existence de ces trous, l'indice $n_{FSM}$ est inférieur à N.

Dans l'exemple, le coeur 2 est en silice pure ou dopée ; l'anneau 4 a une taille sub-micronique et il est en silice légèrement dopée au germanium ; le rayon interne de l'anneau est noté R1, son rayon externe R2 et son épaisseur $\Delta R$ ($\Delta R$=R2-R1) ; et la gaine 6 est de type air-silice. Remarquons que le diamètre du coeur 2 vaut 2R1.

Les paramètres de la microstructuration sont le diamètre $\underline{d}$ des trous d'air 8 et l'espacement $\Lambda$ de ceux-ci.

On précise que l'indice $n_{FSM}$ dépend des paramètres opto-géométriques $\lambda$, $\Lambda$ et $d/\Lambda$ de la fibre.

Comme on le voit sur la figure 1A, afin de constituer le coeur 2 entouré par l'anneau 4, le trou ou capillaire central est remplacé par le matériau solide, constitutif du coeur, et les six trous ou capillaires correspondant à la première couronne de trous sont remplacés par ce matériau solide. Ce dernier est composé de silice qui est entourée de l'anneau en silice dopée germanium, et encore ensuite entourée par de la silice avant de rencontrer la seconde couronne de trous. Le nombre de trous manquants est donc égal à 7 et l'on dit que la fibre présente un défaut de 7.

Cette géométrie permet d'agrandir la taille du mode fondamental sans trop agrandir le pas (en anglais, *pitch*) $\Lambda$ du réseau de trous. On rappelle que pour une telle géométrie, il faudrait un rapport $d/\Lambda$ égal à 0,047 pour obtenir un seul mode de propagation quel que soit $\lambda/\Lambda$ (voir le document [6]).

Le rapport $d/\Lambda$ doit être le plus petit possible (typiquement $d/\Lambda$ inférieur à 0,25) pour que le nombre de modes guidés soit le plus faible possible.

Le rayon externe R2 de l'anneau 4 est imposé par la fabrication de la fibre. A cause du positionnement des capillaires utilisés pour former la gaine 6, il faut au minimum un espacement égal à $\Lambda/2$ entre le cylindre externe, de rayon R2, délimitant l'anneau 4, et le centre du premier trou d'air rencontré, ce qui correspond à un rayon externe maximum égal à $\left(2\sqrt{3}-1\right)\frac{\Lambda}{2}$.

Un choix approprié des différents paramètres permet d'obtenir un mode fondamental dont le profil d'intensité est aplati.

Ce mode aplati est obtenu lorsque son indice effectif est égal à celui du coeur. La planéité du profil d'intensité transverse du mode fondamental est alors optimisée pour le couple ($\Delta$n ; $\Delta$R). Un exemple d'optimisation pour d/$\Lambda$ = 0,25 est donnée sur la figure 1C. On rappelle que $\Delta$n (saut d'indice ou contraste d'indice) est la différence entre l'indice optique de l'anneau 4 et celui du coeur 2, et que $\Delta$R représente l'épaisseur de l'anneau.

Plus précisément, la figure 1C donne l'épaisseur de l'anneau permettant l'obtention d'un profil aplati, en fonction du contraste d'indice, pour un défaut de 7, pour plusieurs espacements $\Lambda$ entre les trous d'air, à savoir A=8,5 µm (courbe I), $\Lambda$=17 µm (courbe II) et $\Lambda$=30 µm (courbe III) et pour d/$\Lambda$ = 0,25.

Les contrastes d'indice $\Delta$n, que l'on peut lire sur la figure 1C, sont réalisables par la technique OVD, c'est-à-dire la technique de dépôt externe en phase vapeur (en anglais, *outside vapor deposition*), soit par dépôt de silice dopée au germanium autour d'un barreau de silice pure, soit par dépôt de silice pure autour d'un coeur dopé au fluor. La technologie actuelle de fabrication permet de contrôler les dimensions de l'anneau à quelques pourcents près et d'obtenir un contraste d'indice à $5 \times 10^{-4}$ près.

Il convient de noter que les dépôts de germanium autour de la silice ou de silice pure autour d'un coeur dopé fluor ne sont que des exemples possibles.

On précise ci-après le raisonnement utilisé pour le dimensionnement d'une fibre optique à mode fondamental aplati :

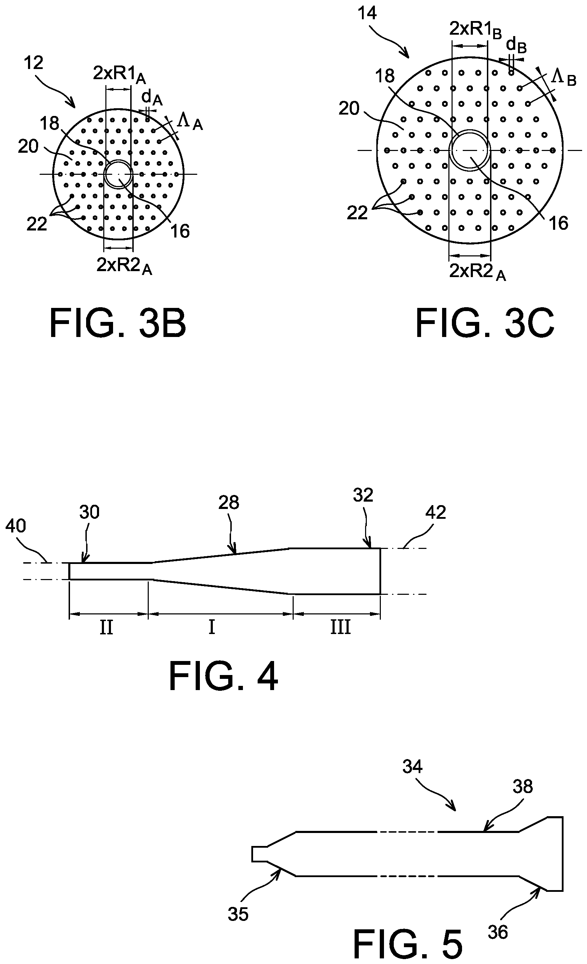

- on choisit la longueur d'onde $\lambda$ de la lumière guidée dans la fibre (par exemple $\lambda$=1 µm ou $\lambda$=1,55 µm),
- on choisit le nombre de capillaires remplacés par un coeur solide dans la structure à trous (par exemple un défaut de 7),
- on choisit le rapport d/$\Lambda$ (par exemple d/$\Lambda$=0,12),
- on choisit le taux de dopage T du coeur par des ions de terres rares (T≥0), ce qui détermine l'indice du coeur N (voir la figure 5), et
- on choisit l'espacement entre les trous d'air $\Lambda$, ce qui détermine le diamètre des trous d, le rayon externe R2 et l'indice optique effectif ou indice optique moyen $n_{FSM}$ de la gaine optique.

Il existe alors une relation entre l'épaisseur $\Delta$R de l'anneau et le contraste d'indice $\Delta$n. Cette relation est la suivante :

$$\Delta R = \frac{\alpha}{(\Delta n)^{\beta}} \quad (1).$$

Les valeurs des paramètres $\alpha$(exprimé en µm) et $\beta$ dépendent des paramètres choisis précédemment (longueur d'onde $\lambda$, valeur du défaut, rapport d/$\Lambda$, valeur N de l'indice optique du coeur résultant de l'éventuel dopage, espacement $\Lambda$ entre les trous d'air).

Par exemple, lorsque le coeur est en silice non dopée, $\alpha$ est donné par la formule suivante :

$$\alpha = 2{,}489 \times 10^{-2} (d/\Lambda)^{0{,}25} \lambda^2/\Lambda$$

où $\alpha$ est exprimé en micromètres lorsque d, $\Lambda$ et $\lambda$ sont également exprimés en micromètres ; et $\beta$ vaut 1.

On précise que, d'une manière générale, on a : $\Delta n > 10^{-3}$, $5 \times 10^{-4}\,\mu m \leq \alpha \leq 5 \times 10^{-2}\,\mu m$, et $0{,}5 \leq \beta \leq 1{,}5$.

Lorsque l'on dispose de la fibre à mode fondamental aplati, plus exactement de la fibre ayant un mode fondamental dont le profil d'intensité est aplati, la mise en forme spatiale est effectuée par l'intermédiaire de l'excitation de ce mode fondamental aplati, résultant de l'injection du faisceau incident dans la fibre (voir le document [5]).

Mais le fait que le mode fondamental de la fibre n'ait pas la même forme que le faisceau incident entraîne des pertes à l'injection. De plus, d'un point de vue pratique, il est délicat de réaliser une fibre de grande aire effective qui soit infiniment monomode (voir le document [6]). Quelques modes d'ordre supérieur peuvent donc coexister avec le mode fondamental.

L'injection d'un faisceau laser ayant typiquement un profil d'intensité gaussien dans une telle fibre, en espace libre ou par l'intermédiaire d'une fibre optique, excite alors non seulement le mode fondamental mais encore les modes d'ordre supérieur. L'allure spatiale du mode de sortie dépend donc des conditions d'injection et des contraintes sur la fibre.

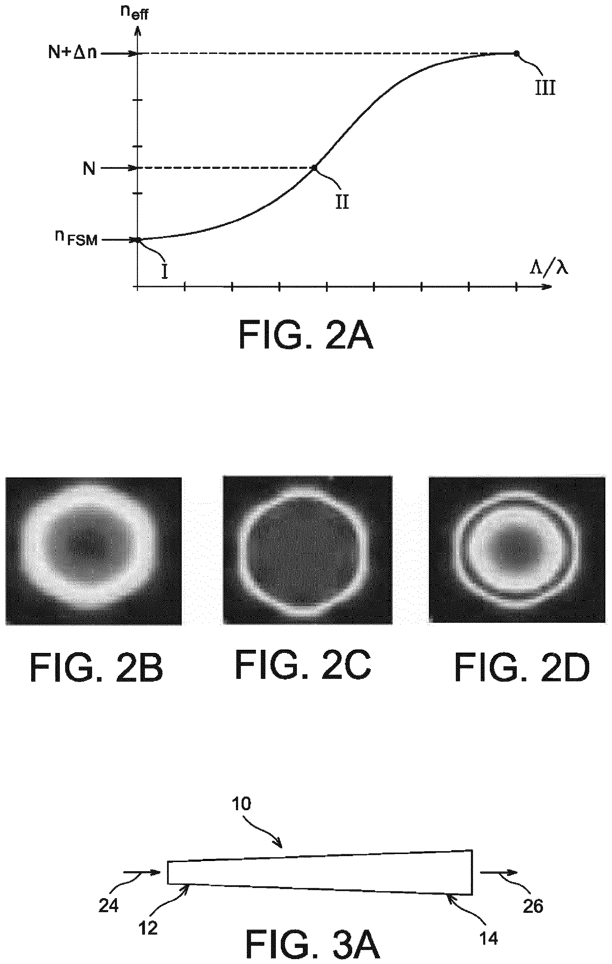

Si l'on considère la structure représentée sur les figures 1A et 1B, le mode fondamental présente une allure spatiale transverse qui dépend du rapport $\Lambda/\lambda$ du pas du réseau de trous d'air à la longueur d'onde. Le comportement est illustré par la figure 2A sur laquelle on a représenté l'allure de l'évolution de l'indice effectif $n_{eff}$ en fonction de ce rapport $\Lambda/\lambda$.

Pour les faibles valeurs de $\Lambda/\lambda$, l'indice effectif du mode est inférieur à l'indice du coeur N. La fibre se comporte comme une fibre à saut d'indice classique, où l'anneau de haut indice qui entoure le coeur n'est quasiment pas « vu » par le mode. Ce mode est alors quasi-gaussien. Plus précisément, la répartition d'intensité du mode fondamental est quasi-gaussienne.

Cette répartition est représentée sur la figure 2B pour une valeur particulière du rapport $\Lambda/\lambda$ corres-

pondant au cas où $n_{eff}$ est proche de $n_{FSM}$ (point I sur la figure 2A) c'est-à-dire à l'indice du mode fondamental de la gaine infinie sans coeur (en anglais, *fundamental space-filling mode index*) (voir le document [7]).

En augmentant la valeur de $\Lambda/\lambda$, le poids de l'anneau devient de plus en plus important. Cela se traduit par une déformation du mode d'allure gaussienne vers un mode aplati. Lorsque l'indice effectif $n_{eff}$ est proche de l'indice N du coeur (point II de la figure 2A), on obtient un mode le plus aplati possible. La répartition correspondante d'intensité du mode fondamental est représentée sur la figure 2C.

En augmentant encore la valeur de $\Lambda/\lambda$, l'indice effectif $n_{eff}$ devient beaucoup plus grand que celui du coeur, ce qui interdit un guidage par réflexion interne modifié dans le coeur. C'est pourquoi dans ce cas, la lumière est principalement guidée dans l'anneau qui a le plus haut indice.

On obtient alors un mode en anneau. Plus précisément, la répartition d'intensité du mode fondamental est en anneau. Cette répartition est représentée sur la figure 2D pour une valeur particulière du rapport $\Lambda/\lambda$, correspondant au cas où $n_{eff}$ est proche de $N+\Delta n$, c'est-à-dire à l'indice de l'anneau (point III sur la figure 2A).

C'est en optimisant la valeur du rapport $\Lambda/\lambda$ que l'on peut parvenir à obtenir un mode plat autour de la longueur d'onde désirée.

Ainsi, pour une fibre optique pour laquelle le pas (en anglais, *pitch*) des trous $\Lambda$ est constant le long de cette fibre, la répartition spatiale d'intensité du mode fondamental évolue d'une allure gaussienne vers un mode en anneau en passant par un mode plat lorsque la longueur d'onde $\lambda$ diminue progressivement.

De façon similaire, si la longueur d'onde $\lambda$ est fixe, la répartition spatiale du mode fondamental va évoluer en fonction de $\Lambda$, c'est-à-dire en fonction de la dimension transverse de la fibre.

La présente invention utilise cette propriété. Elle propose notamment une fibre optique microstructurée effilée (en anglais, *tapered photonic crystal fiber*) dont les dimensions transverses évoluent de façon adiabatique pour permettre de transformer un mode d'entrée ayant une allure gaussienne en un seul mode aplati de large diamètre, tout en minimisant les pertes.

Cet exemple de l'invention est schématiquement illustré par les figures 3A à 3C.

La figure 3A est une vue de profil schématique d'un dispositif de conversion conforme à l'invention, constitué par une fibre optique microstructurée effilée 10. La structure de cette fibre n'apparaît pas sur la figure 3A mais seulement sur les figures 3B et 3C qui sont respectivement des vues schématiques des extrémités 12 et 14 de la fibre 10.

On voit que celle-ci est constituée comme la fibre de la figure 1A et comporte ainsi :

- un coeur 16,
- un anneau 18 qui entoure le coeur et dont l'indice optique est supérieur à celui du coeur, et
- une gaine optique 20 qui entoure l'anneau 18 et comporte des trous longitudinaux 22 et dont l'indice optique moyen est inférieur à l'indice optique du coeur 16.

Mais, à la différence de la fibre de la figure 1A, les dimensions transverses de la fibre 10 varient longitudinalement d'une extrémité à l'autre de cette fibre 10 puisqu'elle est effilée.

Cette fibre 10 est destinée à convertir le profil spatial transverse d'intensité d'un faisceau lumineux incident, ayant une longueur d'onde déterminée $\lambda$ : le faisceau d'entrée 24, injecté dans la fibre 10 par l'extrémité 12 de celle-ci, a un profil gaussien ; et le faisceau de sortie 26, qui sort de la fibre par l'extrémité 14 de celle-ci, a un profil plat.

A cet effet, les extrémités 12 et 14 ont des paramètres opto-géométriques adaptés pour qu'à la longueur d'onde $\lambda$ la fibre 10 ait, au niveau des extrémités 12 et 14, des modes fondamentaux respectivement gaussien et plat, qui correspondent ainsi respectivement aux profils gaussien et plat mentionnés ci-dessus.

Pour une longueur d'onde $\lambda$ donnée, les paramètres opto-géométriques considérés sont les paramètres $\Delta n$, $\Lambda$, d, R1 et R2 définis plus haut. Toutefois, comme on le voit sur les figures 3B et 3C, les paramètres $\Lambda$, d, R1 et R2 sont affectés d'un indice A ou B selon l'extrémité de fibre considérée 12 ou 14.

On explique ci-après comment on choisit ces paramètres opto-géométriques.

Les paramètres de l'extrémité 14 (indice B) sont d'abord choisis avec un rapport $\Lambda_B/\lambda$ donnant un mode fondamental aplati à la longueur d'onde $\lambda$. On diminue ensuite de manière homothétique la dimension transverse de la fibre jusqu'à ce que le rapport $\Lambda_A/\lambda$ donne, en l'extrémité 12 (indice A), un profil d'intensité de forme gaussienne à la longueur d'onde $\lambda$.

En d'autres termes, la géométrie de l'extrémité 12 est homothétique de la géométrie de l'extrémité 14, avec : $R1_A<R1_B$, $R2_A<R2_B$, $\Lambda_A<\Lambda_B$ et $d_A<d_B$; et le rapport $\Lambda_A/\lambda$ est choisi tel que la répartition d'intensité du mode fondamental en l'extrémité 12 soit de forme gaussienne.

Cela permet de maximiser le recouvrement spatial au niveau de cette extrémité 12, avec une répartition d'intensité gaussienne classique, du genre de celle qui est fournie par les lasers monomodes ; et le faisceau lumineux ayant cette répartition peut être injecté dans la fibre 10 soit en espace libre soit par l'intermédiaire d'une fibre optique standard monomode à saut d'indice (en anglais, *step-index, single-mode standard optical fiber*).

Le filtrage modal sera ainsi principalement assuré par l'excellent recouvrement spatial du mode de laser avec le mode d'entrée de la fibre.

Grâce à cette procédure, on obtient un convertisseur de forme de mode sans pertes.

Bien entendu, le dispositif de conversion, que l'on vient de décrire en faisant référence aux figures 3A à 3C, peut aussi servir à la mise en forme spatiale d'un mode de forme aplatie vers un mode de forme gaussienne : il suffit d'injecter un faisceau lumineux, dont le profil spatial transverse d'intensité est aplati, dans la fibre 10, par l'extrémité 14 de celle-ci, pour récupérer un faisceau à profil gaussien en l'extrémité 12.

La figure 4 est une vue de profil schématique d'un autre mode de réalisation particulier du dispositif, objet de l'invention, permettant la mise en forme spatiale d'un mode de forme gaussienne, ayant une aire effective de 165 $\mu m^2$, vers un mode de forme aplatie, ayant une aire effective de 380 $\mu m^2$.

Ce dispositif comprend une fibre optique microstructurée effilée 28. L'extrémité d'entrée de celle-ci a la référence 30 et son extrémité de sortie, la référence 32.

Dans cet exemple, la longueur d'onde $\lambda$ est choisie égale à 1053 nm ; et le rapport d/A de la taille des trous au pas du réseau de trous est constant d'une extrémité à l'autre de la fibre effilée 28 et vaut 0,21. Au niveau de l'extrémité de sortie 32 de la fibre effilée 28, la taille $R2_B$-$R1_B$ de l'anneau vaut 0,476 $\mu$m, le saut d'indice $\Delta n$ vaut 5,2 x $10^{-3}$ et le pas $\Lambda_B$ entre les trous vaut 7,13 $\mu$m. Ces paramètres conduisent à un rapport $\Lambda_B/\lambda$ de 6,8 permettant d'obtenir un profil plat.

Au niveau de l'extrémité d'entrée 30 de la fibre effilée 28, le pas $\Lambda_A$ entre les trous vaut 4,88 $\mu$m, ce qui correspond à un rapport $\Lambda_A/\lambda$ de 4,6 et à une forme gaussienne.

De manière analogue, un convertisseur de forme de mode gaussienne vers une forme de mode en anneau peut être obtenu. Un tel convertisseur présente un intérêt pour certaines applications de microfabrication laser, telles que la trépanation optique (voir le document [8]).

Dans ce cas, on utilise encore une fibre optique microstructurée effilée du genre de la figure 3A, dont l'extrémité d'entrée 12 est encore adaptée au mode gaussien mais dont l'extrémité de sortie est adaptée au mode en anneau.

Plus précisément, au niveau de l'extrémité de sortie, les paramètres sont choisis avec un rapport $\Lambda_B/\lambda$ donnant un mode fondamental en anneau à la longueur d'onde $\lambda$. On diminue ensuite de manière homothétique la dimension transverse de la fibre jusqu'à ce que le rapport $\Lambda_A/\lambda$, au niveau de l'extrémité d'entrée, donne un profil d'intensité de forme gaussienne à la longueur d'onde $\lambda$.

En d'autres termes, pour fabriquer une fibre microstructurée effilée, permettant la mise en forme spatiale d'un mode de forme gaussienne vers un mode de forme en anneau, les paramètres au niveau de l'extrémité de sortie sont choisis tels que le mode fondamental soit en forme d'anneau à la longueur d'onde $\lambda$.

La géométrie de l'extrémité d'entrée est alors homothétique de la géométrie de l'extrémité de sortie, avec : $R1_A<R1_B$, $R2_A<R2_B$, $\Lambda_A<\Lambda_B$ et $d_A<d_B$; et le rapport $\Lambda_A/\lambda$ est choisi tel que la répartition d'intensité du mode fondamental en l'extrémité d'entrée soit de forme gaussienne.

Bien entendu, le dispositif de conversion ainsi obtenu peut également servir à la mise en forme spatiale d'un mode de forme en anneau vers un mode de forme gaussienne : il suffit d'injecter un faisceau lumineux, dont le profil spatial transverse d'intensité est en anneau, dans la fibre, par l'extrémité de sortie mentionnée ci-dessus (indice B) pour récupérer un faisceau à profil gaussien en l'extrémité d'entrée (indice A).

Au vu de ce qui précède, l'homme du métier comprendra que l'on peut également réaliser un dispositif conforme à l'invention, permettant la mise en forme spatiale d'un mode de forme en anneau vers un mode de forme aplatie et inversement.

Le dispositif, objet de l'invention, permet une conversion de mode dans un système entièrement fibré. Il s'agit d'un dispositif compact, robuste et peu onéreux qui n'a pas d'équivalent actuellement. Il présente également l'avantage de fournir un seul mode en sortie grâce à une sélection modale par recouvrement spatial.

Les dimensions transverses de la fibre optique microstructurée effilée peuvent rester sensiblement constantes sur toute la longueur de la fibre sauf en l'extrémité d'entrée ou en l'extrémité de sortie ou en ces deux extrémités.

Ceci est schématiquement illustré par la figure 4 où l'on peut distinguer trois parties dans la fibre 28, à savoir une partie réellement effilée I qui est encadrée par des parties II et III dont les dimensions transverses restent sensiblement constantes. On précise que la variation des dimensions transverses de la fibre dans la partie effilée de celle-ci n'est pas nécessairement linéaire mais peut avoir n'importe quelle forme.

On peut ainsi concevoir un dispositif conforme à l'invention dans lequel les longueurs des parties I et III (respectivement I et II) sont très inférieures à la longueur de la partie II (respectivement III).

La longueur de la partie I peut également être très inférieure à celle des parties II et III.

Et, comme le montre la figure 5, on peut aussi concevoir un dispositif conforme à l'invention dans lequel les dimensions transverses de la fibre microstructurée 34 restent constantes sauf en ses extrémités 35 et 36 qui sont effilées. Les dimensions transverses de l'extrémité 35 très courte augmentent jusqu'à atteindre celles de la partie centrale 38 très longue de la fibre. Et les dimensions transverses de l'extrémité 36 très courte augmentent à partir de celles de cette partie centrale 38.

Le dispositif de l'invention peut également être soudé à la suite d'une fibre monomode classique de transport pour convertir la forme du mode de sortie de manière extrêmement efficace et très peu encombrante, contrairement aux dispositifs en espace libre connus. En effet, l'efficacité d'un dispositif de conversion conforme à l'invention dépend de la « vitesse » d'évolution de la dimension transverse de la fibre microstructurée qu'il comporte.

Il est préférable que cette transition (variation de la dimension transverse d'une extrémité à l'autre de la fibre) soit réalisée de façon adiabatique pour éviter de coupler trop d'énergie dans des modes d'ordres supérieurs et/ou des modes de gaine.

Or, les transferts d'énergie s'effectuent du mode fondamental vers le mode dont l'indice effectif est le plus proche.

Donc, afin de déterminer à partir de quelle longueur un étirement est réalisé de façon adiabatique, on peut utiliser la règle approximative suivante, fondée sur les longueurs de couplage de ces deux modes qui sont susceptibles d'échanger de l'énergie, par rapport à la longueur de la fibre effilée (voir le document [9]) :

$$\left|\frac{dr}{dz}\right| \leq \frac{r(\beta_1 - \beta_2)}{2\pi}$$

où r est le rayon du coeur de la fibre et $\beta_1$ et $\beta_2$ sont les constantes de propagation respectives des deux modes les plus proches.

Une augmentation ou une diminution trop rapides du diamètre de la fibre conduirait à un excédent de pertes lors de la conversion de mode.

Le critère d'adiabaticité ci-dessus conduit typiquement à des dimensions centimétriques voire millimétriques.

La figure 4 illustre également la possibilité, mentionnée plus haut, de coupler optiquement l'extrémité d'entrée d'un dispositif conforme à l'invention à une fibre optique auxiliaire 40. En variante, c'est l'extrémité de sortie du dispositif qui est optiquement couplée à une fibre optique auxiliaire 42. Mais il est également possible de coupler les deux extrémités respectivement aux deux fibres 40 et 42.

De plus, la fibre 40 peut être une fibre non-amplificatrice ou, au contraire, une fibre amplificatrice, et il en est de même pour la fibre 42.

Chacun des exemples de l'invention, donnés plus haut, utilise une fibre optique microstructurée effilée. On sait fabriquer une telle fibre au moyen d'une soudeuse ou au moment d'une soudure avec une autre fibre optique. Et dans ces exemples, la gaine optique comporte des inclusions d'air (trous longitudinaux remplis d'air) ; toutefois l'air n'est qu'un cas particulier : plus généralement, on peut utiliser des inclusions dont l'indice de réfraction est inférieur à celui du coeur.

De plus, la fibre optique microstructurée effilée peut être aussi bien passive (c'est-à-dire non-amplificatrice) qu'active (c'est-à-dire amplificatrice).

Mais l'invention n'est pas limitée à l'utilisation d'une fibre optique microstructurée effilée : elle peut être mise en oeuvre au moyen d'une fibre comportant encore un anneau ayant un indice optique supérieur à celui du coeur, entre ce dernier et la gaine optique, mais privée des trous longitudinaux.

Les dimensions transverses de cette fibre varient encore longitudinalement (fibre effilée), de préférence de façon adiabatique. Et les paramètres opto-géométriques de la fibre sont encore adaptés aux deux extrémités de celle-ci, de la manière expliquée plus haut.

Les documents cités dans la présente description sont les suivants :


[1] J.W. Dawson, R. Beach, I. Jovanovic, B. Wattellier, Z. Liao, S.A. Payne et C.P.J. Barty, "Large flattened mode optical fiber for high output energy pulsed fiber lasers", paper CWD5, CLEO 2003

[2] J.W. Dawson, R.J. Beach, S.A. Payne, M.D. Feit, C.P.J. Barty et Z.M. Liao, *"Flattened Mode Cylindrical and Ribbon Fibers and Amplifiers",* US 2004/0247272 (9 décembre 2004)

[3] J.W. Dawson, R. Beach, I. Jovanovic, B. Wattelier, Z. Liao, S.A. Payne et C.P.J. Barty, "Large flattened mode optical fiber for reduction of non-linear effects in optical fiber lasers", Proc. SPIE 5335, 132-139 (2004)

[4] C. Wang, F. Zhang, Y. Lu, C. Liu, R. Geng et T. Ning, "Photonic crystal fiber with a flattened fundamental mode for the fiber lasers", Opt. Commun. 282, 2232-2235 (2009)

[5] C. Wang, F. Zhang, Y. Lu, C. Liu, R. Geng, T. Ning et S. Jian, "Single mode operations in the large flattened mode optical fiber lasers and amplifiers", J. Opt. A: Pure Appl. Opt. 11, 065402 (2009)

[6] K. Saitoh, Y. Tsuchida, M. Koshiba, et N. Asger Mortensen, "Endlessly single-mode holeyfibers: the influence of core design", Opt. Express 13, 10833 (2005)

[7] P. St. Russell, "Photonic-Crystal Fibers", J. Lightwave Technol. 24, 4729-4749 (2006)

[8] D. Lin et al, "Temporally and spatially shaped fully-fiberized ytterbium-doped pulsed MOPA", Laser Phys. Lett., 8, 747-753 (2011)

[9] J.D. Love, W.M. Henry, W.J. Stewart, R.J. Black, S. Lacroix, F. Gontier, "Tapered single-mode fibres and devices .I. Adiabaticity criteria", IEEE Proceedings-J Optoelectronics 138, 343-354 (1991).


On cite également:


[10] EP 0724 171 qui décrit une fibre optique monomode à coeur segmenté, conçu pour avoir une grande zone efficace pour la transmission de la lumière afin de réduire les effets optiques non-linéaires et d'éviter la dégradation de signaux lumineux

[11] A. K. Gathak et al. "Design of waveguide refractive Index profile to obtain flat modal field", Proc. SPIE Vol. 3666, pp. 40-44, 1er janvier 1998, qui concerne la présentation de la conception d'un profil d'indice de réfraction, permettant d'obtenir un champ modal plat.

## Revendications

**1.** Dispositif de conversion du profil spatial transverse d'intensité d'un faisceau lumineux, ayant une longueur d'onde déterminée, pour le faire passer d'un premier profil, ayant une première forme, à un deuxième profil, ayant une deuxième forme qui est différente de la première forme, dans lequel le premier profil est l'un des trois profils de l'ensemble constitué par un profil quasi-gaussien, un profil plat et un profil en anneau, et le deuxième profil est l'un des deux autres profils de l'ensemble, le dispositif comprenant une fibre optique microstructurée (10, 28, 34) ayant des première (12, 30, 35) et deuxième (14, 32, 36) extrémités et comportant un coeur (16), un anneau (18) qui entoure le coeur et dont l'indice optique est supérieur à celui du coeur, et une gaine optique (20) qui entoure l'anneau et dont l'indice optique est inférieur à celui du coeur, dans lequel les dimensions transverses de la fibre optique varient longitudinalement et les première (12, 30, 35) et deuxième (14, 32, 36) extrémités ont des paramètres opto-géométriques adaptés de telle façon qu'à la longueur d'onde déterminée, la fibre optique ait un mode fondamental ayant le premier profil au niveau de la première extrémité et le deuxième profil au niveau de la deuxième extrémité, de sorte qu'en injectant le faisceau lumineux ayant le premier profil par la première extrémité (12, 30, 35) de la fibre optique, il en ressort par la deuxième extrémité (14, 32, 36) avec le deuxième profil dont la forme est différente de celle du premier profil.

**2.** Dispositif selon la revendication 1, dans lequel la fibre est une fibre optique microstructurée effilée dont les dimensions transverses évoluent de façon adiabatique.

**3.** Dispositif selon l'une quelconque des revendications 1 et 2, dans lequel les dimensions transverses de la fibre optique microstructurée (34) restent sensiblement constantes sur toute la longueur de la fibre optique, sauf en au moins l'une des première (35) et deuxième (36) extrémités.

**4.** Dispositif selon l'une quelconque des revendications 1 à 3, dans lequel la fibre optique microstructurée est choisie parmi les fibres optiques amplificatrices et les fibres optiques non-amplificatrices.

**5.** Dispositif selon l'une quelconque des revendications 1 à 4, comprenant en outre une fibre optique auxiliaire (40, 42) qui est optiquement couplée à l'une des première et deuxième extrémités (30, 32).

**6.** Dispositif selon l'une quelconque des revendications 1 à 4, comprenant en outre deux fibres optiques auxiliaires (40, 42) qui sont respectivement couplées optiquement aux première et deuxième extrémités (30, 32).

**7.** Dispositif selon l'une quelconque des revendications 5 et 6, dans lequel chaque fibre optique auxiliaire (40, 42) est choisie parmi les fibres amplificatrices et les fibres non-amplificatrices.

## Patentansprüche

**1.** Vorrichtung zum Umwandeln des räumlich-transversalen Intensitätsprofils eines Lichtstrahls mit einer bestimmten Wellenlänge, um es von einem ersten Profil mit einer ersten Form in ein zweites Profil mit einer zweiten Form zu überführen, die sich von der ersten Form unterscheidet, wobei das erste Profil eines der drei Profile der Gruppe umfassend ein Quasi-Gauß-Profil, ein flaches Profil und ein ringförmiges Profil, ist, und wobei das zweite Profil eines der beiden weiteren Profile aus der Gruppe ist, wobei die Vorrichtung eine mikrostrukturierte optische Faser (10, 28, 34) mit einem ersten (12, 30, 35) und einem zweiten (14, 32, 36) Ende enthält und einen Kern (16), einen Ring (18), der den Kern umgibt und dessen optischer Index höher als der des Kerns ist, und einen optischen Mantel (20) enthält, der den Ring umgibt und dessen optischer Index geringer als der des Kerns ist, wobei die Querabmessungen der optischen Faser longitudinal variieren und das erste (12, 30, 35) und das zweite (14, 32, 36) Ende optogeometrische Parameter aufweisen, die so ausgelegt sind, dass bei der bestimmten Wellenlänge die optische Faser einen Grundmodus mit dem ersten Profil im Bereich des ersten Endes und mit dem zweiten Profil im Bereich des zweiten Endes aufweist, so dass bei Einkoppeln des Lichtstrahls mit dem ersten Profil über das erste Ende (12, 30, 35) der optischen Faser dieser über das zweite Ende (14, 32, 36) mit dem zweiten Profil austritt, dessen Form sich von der des ersten Profils unterscheidet.

**2.** Vorrichtung nach Anspruch 1, wobei die Faser eine verjüngte mikrostrukturierte, optische Faser ist, deren sich Querabmessungen adiabatisch verhalten.

**3.** Vorrichtung nach einem der Ansprüche 1 und 2, wobei die Querabmessungen der mikrostrukturierten optischen Faser (34) über die gesamte Länge der optischen Faser im Wesentlichen konstant bleiben, abgesehen von dem zumindest einen ersten (35) und einen zweiten (36) Ende.

**4.** Vorrichtung nach einem der Ansprüche 1 bis 3, wobei die mikrostrukturierte optische Faser ausgewählt ist aus verstärkenden optischen Fasern und nicht verstärkenden optischen Fasern.

**5.** Vorrichtung nach einem der Ansprüche 1 bis 4, ferner enthaltend eine optische Hilfsfaser (40, 42), die mit einem des ersten und zweiten Endes (30, 32) optisch gekoppelt ist.

**6.** Vorrichtung nach einem der Ansprüche 1 bis 4, ferner enthaltend zwei optische Hilfsfasern (40, 42), die jeweils mit dem ersten bzw. zweiten Ende (30, 32) optisch gekoppelt ist.

**7.** Vorrichtung nach einem der Ansprüche 5 und 6, wobei jede optische Hilfsfaser (40, 42) ausgewählt ist aus verstärkenden Fasern und nicht verstärkenden Fasern.

## Claims

**1.** Device for converting the transverse spatial profile of the intensity of a light beam which has a given wavelength, so that it changes from a first profile having a first shape to a second profile having a second shape which is different from the first shape, wherein the first profile is one of the three profiles of the set made up of a quasi-Gaussian profile, a flattened profile and a ring-shaped profile, and the second profile is one of the other two profiles in the set, the device comprising an microstructured optical fibre (10, 28, 34) which has first (12, 30, 35) and second (14, 32, 36) ends and which comprises a core (16), a ring (18) which surrounds the core and whose refractive index is greater than that of the core, and an optical cladding (20) which surrounds the ring and whose refractive index is less than that of the core, wherein the transverse dimensions of the optical fibre vary longitudinally and the first (12, 30, 35) and second (14, 32, 36) ends have opto-geometrical parameters designed in such a manner that at the given wavelength the optical fibre has a fundamental mode which has the first profile at the first end and the second profile at the second end, such that when the light beam which has the first profile is introduced through the first end (12, 30, 35) of the optical fibre, it emerges from it through the second end (14, 32, 36) with the second profile, whose shape is different from that of the first profile.

**2.** Device according to claim 1, wherein the fibre is a tapered microstructured optical fibre whose transverse dimensions change in an adiabatic manner.

**3.** Device as claimed in any of claims 1 to 2, wherein the transverse dimensions of the microstructured optical fibre (34) remain substantially constant over the entire length of the optical fibre, except at at least one of the first (35) and second (36) ends.

**4.** Device as claimed in any of claims 1 to 3, wherein the microstructured optical fibre is chosen from amongst amplifying optical fibres and non-amplifying optical fibres.

**5.** Device as claimed in any of claims 1 to 4, which furthermore comprises an auxiliary optical fibre (40, 42) which is optically coupled to one of the first and second ends (30, 32).

**6.** Device as claimed in any of claims 1 to 4, which furthermore comprises two auxiliary optical fibres (40, 42) which are optically coupled to the first and second ends (30, 32) respectively.

**7.** Device as claimed in any of claims 5 and 6, wherein each auxiliary optical fibre (40, 42) is chosen from amongst amplifying optical fibres and non-amplifying optical fibres.

2xR1
d
Λ
4
6
8
2
2xR2

FIG. 1A

n
R1
d
Δn
Λ
N
R
1
R2

FIG. 1B

ΔR(µm)
2
1,5
1
0,5
0
I
II
III
Δn
0
0,005
0,01
0,015
0,02
0,025
0,03

FIG. 1C

neff
N+Δn
N
nFSM
I
II
III
Λ/λ

FIG. 2A

FIG. 2B

FIG. 2C

FIG. 2D

10
24
12
14
26

FIG. 3A

12
2xR1A
dA
ΛA
18
20
22
16
2xR2A

FIG. 3B

14
2xR1B
dB
ΛB
18
20
22
16
2xR2A

FIG. 3C

40
30
28
32
42
II
I
III

FIG. 4

34
38
35
36

FIG. 5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 20040247272 A
- EP 0724171 A


### Littérature non-brevet citée dans la description


- **J.W. DAWSON ; R. BEACH ; I. JOVANOVIC ; B. WATTELLIER ; Z. LIAO ; S.A. PAYNE ; C.P.J. BARTY.** Large flattened mode optical fiber for high output energy pulsed fiber lasers. *paper CWD5, CLEO,* 2003
- **J.W. DAWSON ; R. BEACH ; I. JOVANOVIC ; B. WATTELIER ; Z. LIAO ; S.A. PAYNE ; C.P.J. BARTY.** Large flattened mode optical fiber for reduction of non-linear effects in optical fiber lasers. *Proc. SPIE,* 2004, vol. 5335, 132-139
- **C. WANG ; F. ZHANG ; Y. LU ; C. LIU ; R. GENG ; T. NING.** Photonic crystal fiber with a flattened fundamental mode for the fiber lasers. *Opt. Commun.,* 2009, vol. 282, 2232-2235
- **C. WANG ; F. ZHANG ; Y. LU ; C. LIU ; R. GENG ; T. NING ; S. JIAN.** Single mode operations in the large flattened mode optical fiber lasers and amplifiers. *J. Opt. A: Pure Appl. Opt.,* 2009, vol. 11, 065402
- **K. SAITOH ; Y. TSUCHIDA ; M. KOSHIBA ; N. ASGER MORTENSEN.** Endlessly single-mode holey-fibers: the influence of core design. *Opt. Express,* 2005, vol. 13, 10833
- **P. ST. RUSSELL.** Photonic-Crystal Fibers. *J. Lightwave Technol.,* 2006, vol. 24, 4729-4749
- **D. LIN et al.** Temporally and spatially shaped fully-fiberized ytterbium-doped pulsed MOPA. *Laser Phys. Lett.,* 2011, vol. 8, 747-753
- **J.D. LOVE ; W.M. HENRY ; W.J. STEWART ; R.J. BLACK ; S. LACROIX ; F. GONTIER.** Tapered single-mode fibres and devices .I. Adiabaticity criteria. *IEEE Proceedings-J Optoelectronics,* 1991, vol. 138, 343-354
- **A. K. GATHAK et al.** Design of waveguide refractive Index profile to obtain flat modal field. *Proc. SPIE,* 01 Janvier 1998, vol. 3666, 40-44